# EUROPÄISCHE PATENTANMELDUNG

(11) **EP 2 211 318 A1**
(43) Veröffentlichungstag der Anmeldung: **28.07.2010**
(21) Anmeldenummer: 09150566.9
(22) Anmeldetag: 14.01.2009
(51) Int. Cl.: G07F 19/00, G06Q 20/00, G06Q 40/00

(54) **Verfahren und Vorrichtung zur Scheckeinreichung**

(71) Anmelder: Wincor Nixdorf International GmbH, 33106 Paderborn (DE)
(72) Erfinder: Saegert, Ralf, 33178 Borchen (DE); Münstermann, Heinz Werner, 33181 Bad Wünnenberg (DE); Maiwald, Thomas, 33142 Büren Wewelsburg (DE)
(74) Vertreter: 2K Patentanwälte Blasberg Kewitz & Reichel

(57) **Zusammenfassung**

Verfahren zur Übergabe und Verarbeitung von Schecks mit einem SB-Automaten, der eine Leseeinheit aufweist, um die Bilddaten eines Schecks einzulesen, mit einem Web-Service, der über ein Netzwerk bereitgestellt wird, umfassend die Schritte:
- erfassen der Bilddaten des Schecks durch den SB-Automat durch die Leseeinheit;
- Übermitteln der Bilddaten an den Web-Service auf der Basis einer offenen API (Application Programming Interface) ohne dabei auf die Standardprotokolle von SB-Automaten im Bereich des Zahlungsverkehrs zurückzugreifen;
- Verarbeiten der Bilddaten durch den Web-Service, so dass die Textdaten auf dem Scheck erkannt werden;
- Verbuchen der erkannten Daten.

## Beschreibung

Die Erfindung betrifft ein Verfahren und eine Vorrichtung zur Scheckeinreichung. Insbesondere betrifft die Erfindung eine Schnittstelle eines Selbstbedienungsautomaten zur Übertragung von Scheckdateninformationen, die eine sofortige Buchung erlaubt.

### Gebiet der Erfindung:

Heute können Kundenschecks in Scheck Deposit Terminals (Selbstbedienungsautomaten SB-Automaten oder auch ATM genannt) deponiert werden. Die Schecks werden ohne Validierung verarbeitet und der Kunde bekommt eine Quittung, dass er den/die Scheck(s) deponiert hat. Bis es zu einer Betragbuchung bzw. Kontobewegung kommt, müssen die Schecks aus den Terminals zu sogenannten Clearing- Zentren geschickt werden. Das geschieht über den normalen Postweg. Das hat zur Folge, dass die Validierung und die endgültige Verbuchung des Scheckbetrages erst nach einigen Tagen oder Wochen erfolgt.
Die Druckschriften WO 99/11021 und die Einträge unter Check 21 Act in Wikipedia beschreiben die Handhabung von Schecks als gescannte Daten. Eine exakte Implementierung in Bezug zu einem SB-Automaten wurde jedoch nicht offenbart.

Im Bereich der Selbstbedienungsautomaten gibt es eine Vielzahl von Kommunikationsprotokollen, wie NDC, DDC, IFX usw. All diese Standardprotokolle enthalten nicht die notwendigen Definitionen für eine integrierte vollständige Bild-Überprüfung und Verarbeitung. Eine Erweiterung der Standardprotokolle ist aufgrund der Interessen der Vielzahl der Mitglieder sehr herausfordernd und schwierig. Somit bedarf es einer alternativen Lösung, um die Erweiterung der SB-Automaten zu ermöglichen, so dass eine Überprüfung der Bilddaten, die in der Regel Schecks darstellen, ermöglicht wird.

### Übersicht über die Erfindung:

Aufgabe der vorliegenden Erfindung ist die Bereitstellung eines Verfahrens und einer Vorrichtung, insbesondere eines Selbstbedienungsautomaten, der eine Erweiterung von SB-Automaten bereitstellt neben den bestehenden Protokollen, so das in einer möglichen Ausführungsform, die Überprüfung von Bilddaten und deren Analyse erlaubt wird.

Gelöst wird diese Aufgabe durch Merkmale der unabhängigen Ansprüche.
Um die Überprüfung eines Schecks in einem Selbstbedienungsautomaten zu erreichen, basiert auf die Erfindung auf den folgenden Elementen. Diese Elemente sind
- eine eindeutige API (application programming interface), um die Server/Hostfunktionalität bereitzustellen,
- eine Implementierung der API in einer offenen Standardtechnologie als einen Web-Service.
Eine mögliche Erfindungsidee dahinter ist, dass SB Automaten und andere Überprüfungslesegeräte, die Prüf- und Lesefunktionalität von unterschiedlichen CPS (Cheque Processing System) durch ein einziges Web-Service-Interface integrieren können. Somit sind der Host und der Client unabhängig von einander. Die Implementierung des Web-Services verbindet den Client mit dem spezifischen CPS-System in der individuellen Kundenumgebung. Client und Host Software müssen nicht verändert werden und sie sind weiterhin unabhängig voneinander.

Es gibt wahrscheinlich genauso viele Definitionen für Web-Services wie es Unternehmen gibt, die welche bereitstellen, aber den vielen Definitionen ist folgendes gemeinsam:
1 Web-Services stellen eine benutzbare Funktionalität dem Benutzer über einen Standard Web-Protokoll zu Verfügung. In den meisten Fällen wird als Protokoll SOAP (Simple Object Access Protocol) verwendet. Es ist ein Netzwerkprotokoll, bei dem Daten zwischen Netzwerksystem über RPC (Remote Procedure Calls) ausgetauscht werden können.
2. Web Services stellen einen Weg zur Verfügung, der das Interface in einem ausreichenden Detaillierungsgrad beschreibt, so dass der Benutzer in der Lage ist, eine Client-Anwendung zu entwickeln, die mit dem Web-Service kommuniziert. Diese Beschreibung ist normalerweise in einem XML-Document beschrieben unter Verwendung z.B. der Web Services Description Language (WSDL).
3. Web Services sind registriert, so dass potentielle Benutzer sie einfach finden können. Dies wird in der Regel erreicht mit der Universal Discovery Description and Integration (UDDI).

Eine der primären Vorteile der Webarchitektur ist, dass sie erlaubt, dass Programme in unterschiedlichen Sprachen und auf unterschiedlichen Plattformen programmiert werden, die jedoch in standardisierter Weise miteinander kommunizieren und Informationen austauschen. So arbeiten sie mit Standardwebprotokollen wie XML, HTTP and TCP/IP. Eine signifikante Anzahl von Firmen hat bereits eine Webinfrastruktur und somit ist ein Wissen und eine Erfahrung auf diesem Gebiet gegeben, um diese Struktur aufrechtzuerhalten und zu verwalten. Somit sind die Kosten für einen Eintritt in den Bereich der Web-Services signifikant geringer als in vorhergehenden Technologien.

Dieser Ansatz erlaubt es dem Kunden, eine Multivendorstrategie (mehrere Verkäufer-Strategie) in beide Richtungen zu fahren. Web-Services sind eine fundamentale Technologie und stellen einen wichtigen evolutionären Schritt in Richtung des verteilten Rechnens dar. Offene Standards und der Focus auf Kommunikation und Zusammenarbeit zwischen Menschen und Anwendungen haben eine Umgebung geschaffen, in der Web-Services die Plattform für Anwendungs-Integration werden. Anwendungen werden entwickelt unter Verwendung mehrerer Web-Services von unterschiedlichen Quellen, die zusammenarbeiten unabhängig davon, wo sie sich befinden oder wie sie implementiert wurden.

Mit dieser Erfindung wird eine einheitliche Schnittstelle in Form eines WEB-Services geschaffen, in der Methoden enthalten sind, die den elektronischen Versand von Schecks oder Überweisungsbelegen von einem Geldautomaten zu einem entfernten Scheckvalidierungs Server definiert. Gleichzeitig wird mit dieser Schnittstelle eine online (realtime) Validierung von einem Scheckvalidierungs Server ermöglicht. (Es sind auch Batch-Überprüfungen mit dieser Technologie denkbar).
Ein wichtiger Aspekt ist die Definition von Funktionen und Parameter, die eine Schecktransaktion mit gleichzeitiger online (realtime) Buchung ermöglichen. Das heißt, die vom Kunden deponierten Schecks werden, während die Kundentransaktion aktiv ist, elektronisch als Bilddaten (BMP, JPG oder TIF) zu einem entfernten Validierungsserver gesendet und sofort validiert. Der Kunde hat direkt die Möglichkeit, die Betragsbestätigung auszulösen, wobei die Beträge sofort auf die jeweiligen Konten gebucht werden können. Es gibt somit eine allgemein gültige Schnittstelle auf Basis der WEB-Service Technologie, die Server- und Client Provider ermöglichen, diese Schnittstelle zu benutzen, um für die online Scheckverarbeitung eine Kommunikationslogik zu entwickeln. Der Vorteil ist die Vorgabe von Funktionen und Datenfelder die lediglich mit vordefinierten Werten gefüllt werden müssen. Die feste Vorgabe der Funktionen und Datenfelder ermöglicht eine völlig unabhängige Entwicklung der Client und Server Anwendung.

Es ergeben sich somit eine Reihe von Vorteilen. So ist einer der Vorteile der bereits in Teilen erwähnt wurde, der hohe Grad an Unabhängigkeit. Sobald die Kunden die eindeutige Web- Service- API integriert haben, sind sie vom Hostsystem unabhängig. Auf der anderen Seite bedarf es keiner spezifischen Geräteintegrations Anstrengung. Wie bereits oben erwähnt wurde, hat der Kunde nun die Möglichkeit, eine Multivendorstrategie für Clienten zu wählen und ein CPS System.

Weiterhin hat man eine Möglichkeit der einfachen Integration in eine offene standardisierte Umgebung. Neben der einmaligen Integration eines Web-Service-Proxy auf dem Client ist die Hauptintegration darin zu sehen, den Web-Service selber zu implementieren. Die Web-Service-Implementierung realisiert die Verbindung zwischen dem eindeutigen Client API und dem individuellen CPS Hostsystem. Der Vorteil daran ist, dass die Web-Service Entwicklung in einer vollständig offenen Umgebung mit Standardtechnologien erfolgen kann.

Ferner bedarf es keines ATM Protokolls oder einer Erweiterung dessen. Die Erweiterung von bestehenden Protokollen hat gezeigt, dass dies ein oftmals langwieriger und schwieriger Prozess ist. Weiterhin wäre der der Aufwand sehr hoch, um spezifische CPS Lösungen für jedes ATM Protokoll (. NDC, DDC, IFX etc.) durchzuführen.

Weiterhin bedarf es keiner Installation von Scheck-Überprüfung und Lesesoftware auf dem Clienten (SB-Automat bzw. ATM). Dies würde in der Regel einen hohen Verwaltungsaufwand mit sich bringen, da die Software auf jedem Gerät installiert werden müsste und kontinuierlich upgedated werden muss und synchronisiert werden muss. Ferner ist die Integration in ein ATM-Software sehr spezifisch.

Daraus ergibt sich im Umkehrschluss, dass die Wartung sehr einfach ist, dass die Hauptteile auf einem zentralen Server Web-Service-Server oder dem CPS-System oder einem anderen Host- System laufen. Ein weiterer Vorteil stellt die Skalierbarkeit und Flexibilität dar, die Web-Service-Lösung macht es möglich, dass der Web-Service entweder auf dem Client (was nicht ratsam ist) oder auf einem separaten Server oder auf dem gleichen Server wie das CPS System läuft.
Als Software für die sichere Daten-Übertragung kann HTTPS verwendet werden was wohl bekannt ist.
Durch diesen Ansatz ist es möglich, dass auch andere Bilderfassungssoftware das Interface verwenden kann, da es sich um einen offenen Standard handelt.

### Beschreibung der Figuren

Im Folgenden werden die Figuren kurz beschrieben, wobei die konkreten Ausführungsformen nicht beschränkend aufzufassen sind, sondern lediglich dem Verständnis dienen sollen. Der Schutzumfang der Erfindung soll alleine durch die Ansprüche bestimmt werden:
- Fig. 1: zeigt die eine Strukturübersicht der Erfindung mit unterschiedlichen Lösungen von unterschiedlichen Herstellern;
- Fig. 2: zeigt den Ablauf der Erfindung in einem Flussdiagramm;
- Fig. 3: zeigt den Ablauf der Eingabe eines Schecks gemäß Fig. 2 mit mehreren Korrekturen;
- Fig. 4.: zeigt den Ablauf der Erfindung mit dem Entfernen eines Schecks;

### Beschreibung einer Ausführungsform:

Teile der folgenden Beschreibung der Web-Service API werden in WSDL Notation beschrieben (es wird darauf hingewiesen, dass eine Vielzahl von Programmiersprachen verwendet werden kann, die verwendete dient lediglich zum exemplarischen Verständnis).

Wenn eine Nachricht zwischen den Geräten und dem Service gesendet wird, ist es möglich, dass sich der Inhalt bei der Übertragung im Netzwerk. Das kann dazu führen, dass die gleiche Nachricht beim Service zweimal ankommt. Das gleiche Verhalten ist möglich, wenn der Service eine Nachricht an das Endgerät sendet. Aus diesem Grunde wird eine *MessageId* verwendet, die sicherstellt dass die gleiche Nachricht nicht zweimal bearbeitet wird. Jedes Mal wenn eine Methode auf dem Service ausgeführt wird, erhält die Methode einen Nachrichten-Identifizier (ID). Dieser Nachrichtenidentifizierung muss eindeutig sein innerhalb des Service für alle Nachrichten, so dass das Gerät einen eindeutigen Identifizierer für jede Nachricht konstruieren muss. Der Service muss die Nachrichtenidentifizierer empfangen, um sicherzustellen dass diese eindeutig sind. Falls der gleiche Nachrichtenidentifizierer empfangen wird durch den Dienst für die gleiche Methode, dann muss der Service seine ursprüngliche Antwort erneut übergeben. Falls der gleiche Nachrichtenidentifizierer in unterschiedlichen Methoden empfangen wird, dann muss der Service sicherstellen, dass es ein Problem gibt, und muss einen entsprechenden Fehlercode *InvalidMessageId* zurückgeben. Dies impliziert, dass der Service Kopien von allen Nachrichten, die er empfängt und sendet, vorhalten muss, so dass er die eingehenden Nachrichten validieren kann und die ausgehenden Nachrichten reproduzieren kann. Das Endgerät muss entsprechend alle Nachrichten, die es sendet, überwachen, so dass es keine doppelten Antworten erhält. Doppelte Antworten können ignoriert werden.

Ein weiterer Ansatz der vorliegenden Erfindung liegt darin, dass jeder Methodenaufruf durch Übermittlung einer Versions-Information sicherstellen kann, dass die richtige Art von Service verwendet werden kann. Das Endgerät sollte normalerweise die gleichen Versionswerte in jeden Methodenaufruf integrieren, so dass der Server in der Lage ist, zu erkennen, welche Version der Methode verwendet wird. Die Version der Methode ist im Allgemeinen die gleiche, wie die Version der API selber. Der Server kann somit unterschiedliche Versionen von APIs unterstützen. Er muss den Versionswert in jedem Methodenaufruf prüfen um sicherzustellen, dass die Version der Methode unterstützt wird. Falls die Version nicht unterstützt wird, dann muss der Service einen *UnsupportedVersion* error an das Gerät (SB/ATM) mitteilen. Der Hersteller des Endgerätes (SB/ATM) muss berücksichtigen, dass dieser Fehler auf jeden individuellen Methoden-Aufruf angewendet werden kann, so dass das Endgerät diese Fehler entsprechend abarbeiten muss. So ist es zum Beispiel möglich, zwei unterschiedliche Scheckhinterlegungs-Services auf unterschiedlichen Servern bereitzustellen, die auf Methodenanfragen in einem Lastverteilungs-Szenario antworten. Falls zwei Methoden vom gleichen Gerät zu unterschiedlichen Servern geroutet werden, kann die Version für einen Server zulässig sein jedoch nicht für den anderen. Das Endgerät kann nicht davon ausgehen, dass alle Methoden einer Version immer zulässig sind, wenn lediglich ein Methodenaufruf einmal erfolgreich war. Eine individuelle Methode kann einen Versionswert haben, der unterschiedlich ist, von dem anderer Methodenaufrufe in der Version der API, auch wenn dies ein außergewöhnlicher Zustand ist, sollte dies berücksichtigt werden, jedoch auch möglichst vermieden werden. Die Versionsnummer wird aus Haupt- und Unterextensionselementen bestimmt. Auf der Basis dieser fein strukturierten Versionsnummern können Regeln festgelegt werden, die bestimmen, ob es sich um Größere oder kleinere Veränderungen bei den Versionen handelt.

Auf der Basis der Überlegungen kann bei einer Fehlermeldung des Dienstes mehrfach versucht werden, die Methode erneut auszuführen oder es erfolgt ein Abbruch nach einer gewissen Anzahl von Versuchen. In einer alternativen Ausführungsform kann der Dienst auch unmittelbar aufgeben, weitere Versuche zu senden.

Mögliche Methoden werden in der folgenden Tabelle dargestellt.

| METHOD | Beschreibung |
|---|---|
| GetCapabilities | Bestimmen der Fähigkeiten des Dienstes/Service |
| StartTransaction | Startet eine neue TrSchechkhinterlegungstransaktion |
| Processitem | Fügt ein neues Dokument in die offene Transaktion. Ein bild wird an das CPS gesendet. transaction. Image is sent to CPS. |
| Updateltem | Ändert das Dokument in der geöffneten Transaktion |
| Removeltem | Löscht das Dokument in der geöffneten Transaktion. |
| CancelTransaction | Bricht die geöffnete Transaktion ab |
| CommitTransaction | Bestätigt die offene Transaktion und schließt sie |

So kann durch die Methode GetCapabilites vom Service erfragt werden, welche Sprachen unterstützt werden, welche Bilddaten unterstützt werden, welche Art von Transaktionen, wie viel Schecks übergeben können werden können und so weiter. Der Client beziehungsweise das SB System kann somit die Fähigkeiten des Services abfragen, um die folgenden Methodenaufrufe richtig zu Steuern. Details der genauen Art der Abfrage werden hier aus Gründen der Beliebigkeit und der Kürze weggelassen. Ein Fachmann kann die Art der Aufrufe von den weiteren Beispielen, die folgen, ableiten.
Die Methode StartTransaction erlaubt zum Beispiel die Übergabe folgender Parameter:

| PARAMETER | BESCHREIBUNG |
|---|---|
| Messageld | Hierbei handelt es sich um den eingangs erwähnten eindeutigen Identifizierer |
| Version | Version der Methode, die durch das Gerät verwendet wird |
| Major | Haupt-Versionsnummer der API Specification |
| Minor | Minor version number der API |
| Extension | Optionale Versionsnummer, die nach Absprache verwendet werden kann |
| LanguageName | Sprache für Meldungen. |
| Machineld | Eindeutige ID für die ATM/SB, der sicherstellt dass es lediglich eine offene Transaktion für das Gerät gibt. Die ID kann sich zusammensetzen aus unterschiedlichen Komponenten wie Branch ID, workstation ID, LUNO |
| Account | Bestimmt das Konto, auf dem der Scheck gutgeschrieben werden soll. |
| TransactionType | Einzahlung, Überweisung, unbekannt, BatchEinzahlung, BatchBezahlung, BatchUnbekannt |
| TransactionContent | Nur Scheckts, Gutschrift und Schecks |
| Additionallnfo | Zusätzliche Informationen. |

Das Endgerät beziehungsweise ATM/SB übermittelt mit dem Methodenaufruf startTransaction die oben aufgeführten Parameter an den Dienst/Service. Dabei berücksichtigt das Endgerät die Sprache des Benutzers und übergibt die oben aufgeführten Identifikationen einem Dienst. Weiterhin wird die Kontonummer übergeben, die in der Regel von einer Karte ermittelt wurde. Die weiteren Informationen die, übergeben werden, werden oftmals in einem Dialog mit dem Benutzer ermittelt.
Der Service wertet im Gegenzug die so übermittelten Daten aus und gibt gegebenenfalls Fehlermeldungen zurück, wenn er den Anforderungen wie Version, Sprache nicht gerecht werden kann. Wenn alle Daten berücksichtigt werden können, gibt er als Antwort StartTransaction zurück, auf deren Details hier nicht weiter eingegangen wird, da sie recht simple aufgebaut ist.

Im Folgenden wird auf die Methode ProcessItem eingegangen, durch die die Scheckdaten vom SB Gerät an den Service übermittelt wird.

| PARAMETER | DESCRIPTION |
|---|---|
| MessageId | Eindeutige ID |
| Version | Version s.o. |
| Major | |
| Minor | |
| Extension | |
| Transactionld | Eindeutige Transactions-ID für diese Transaktion |
| Gender | Belasten oder Gutschreiben oder unbekannt |
| MicrCodeline | Buchstaben/Codeline die durch den Magnetkartenleser gelesen wurden. |
| includesSpaces | Hinweis ob Leerzeichen in der Codeline sind. |
| Frontimage | Vorderbild des Schecks |
| Type | Typ der Bilddaten |
| | None - keine Bildelement |
| | BMP - Bitmap |
| | GIF - Graphics Interchange Format |
| | JPEG - JPEG File Interchange Format |
| | JPEG2000 - JPEG 2000 |
| | PNG - Portable Network Graphics |
| | TIFF - Tagged Image File Format |
| | WMF - Windows Metafile |
| Image | Base64-encoded Bild |
| Rearlmage | Hinterseitenbild |
| Type | s.o |
| Image | s.o |

| PARAMETER | DESCRIPTION |
|---|---|
| CheckDate | Ausgabetag des Schecks |
| PostingDate | Übergabetag des Schecks |
| Additional Info | Zusatzinformation |

Die Beschreibung der Tabelle ist so verständlich, dass weitere Details hierzu sich erübrigen. Zu berücksichtigen ist, dass sowohl die Vorderseite als auch die Rückseite als Bilddaten übertragen werden und einige Zusatzdaten wie Übermittlungszeiten des Schecks.

Als Antwort erhält der SB vom Service als ProcessItem Response

**ProcessltemResponse**

| PARAMETER | Beschreibung |
|---|---|
| originalMessageld | s.o. |
| Error | Fehlermeldung in Bezug auf die unterschiedlichen Daten, die übergeben wurden |
| Itemld | Eindeutige ID für das Dokument innerhalb der Transaktion |
| Fields | |
| Gender | Gutschrift oder Belastung |
| Amount | Wert des Schecks |
| Account | Kontonummer des Schecks |
| SerialNumber | Seriennummer des Schecks |
| Bankld | Bankkennung der ausstellenden Bank |
| OpticalRecognitionAm ount | Wert der auf dem Scheck erkannt wurde |
| OpticalRecognitionAm ountScore | Wert der die Genauigkeit des Erkennung bestimmt |
| FundsAvailability | Zeitraum der Wertstellung |
| CheckDate | Ausstellungsdatum des Schecks |
| PostingDate | Übertragungsdatum |

Auch diese Informationen sind sehr detailliert und lassen für den Fachmann einen eindeutigen Rückschluss auf den Ablauf zu.

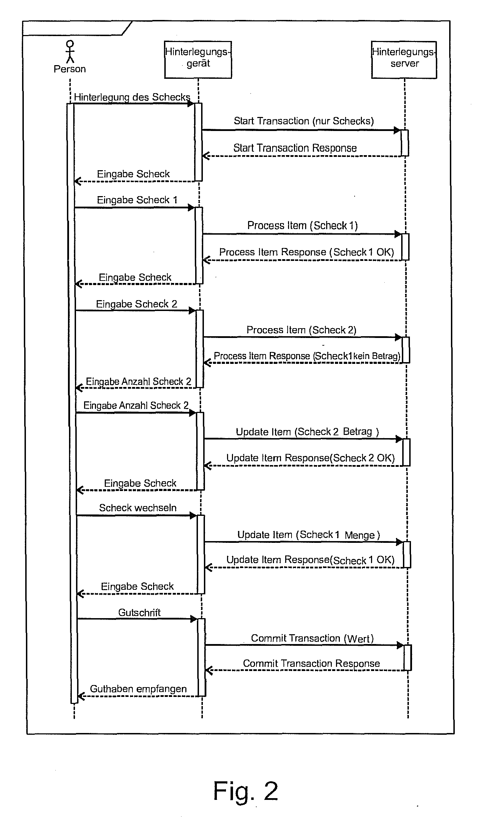

Die Figuren 2 bis 4 zeigen einen Konkreten Ablauf auf der Basis der Beschriebenen Methoden und deren Parametern.
Figur 2 zeigt, dass von einem SB-Automat, der lediglich Schecks annimmt, die Transaktion gestartet wird, indem der Benutzer einen entsprechenden Dialog ausführt. Auf die Antwort des Web-Service-Server wird der Benutzer aufgefordert den Scheck einzuführen. Nach dem Einführen des Schecks wird dieser verarbeitet und der Server übermittelt, dass die übergebenen Daten korrekt sind. Nun werden in weiteren Schritten der Benutzer aufgefordert, weitere Schecks einzugeben, wobei sich beim zweiten Scheck herausstellt dass die Höhe des Schecks entweder fehlte oder nicht erkennbar war. Der Benutzer wird nun aufgefordert die Höhe des Schecks einzugeben, was wiederum dann an den Web-Service-Server übermittelt wird. Weiterhin ist erkennbar, dass der Benutzer den Wert des Schecks 1 ändern möchte, da dieser durch den Server nicht korrekt erkannt wurde. Nachdem nun alle Daten abgebildet wurden, wird die Transaktion abgeschlossen und die Gutschrift erfolgt.

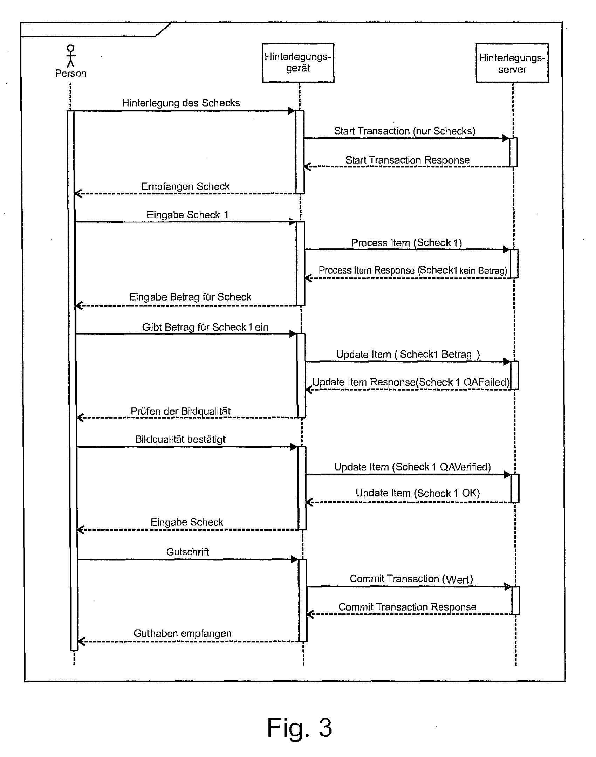

Die Figur 3 zeigt einen Ablauf bei dem mehrere Korrekturen bei der Eingabe vorgenommen werden müssen. Einerseits ist der Wert nicht erkennbar, so dass dieser manuell nachgefordert wird, andererseits ist die Qualität des Bildes des Schecks nicht ausreichend, dass der angegebene Betrag mit den Daten des Schecks übereinstimmt. Aus diesem Grunde wird der SB Automat aufgefordert, die Bildqualität des Schecks 1 zu überprüfen und gegebenenfalls die Qualitätswerte erneut zu übertragen. Nachdem dies nun erfolgt ist, kann eine Gutschrift erfolgen.

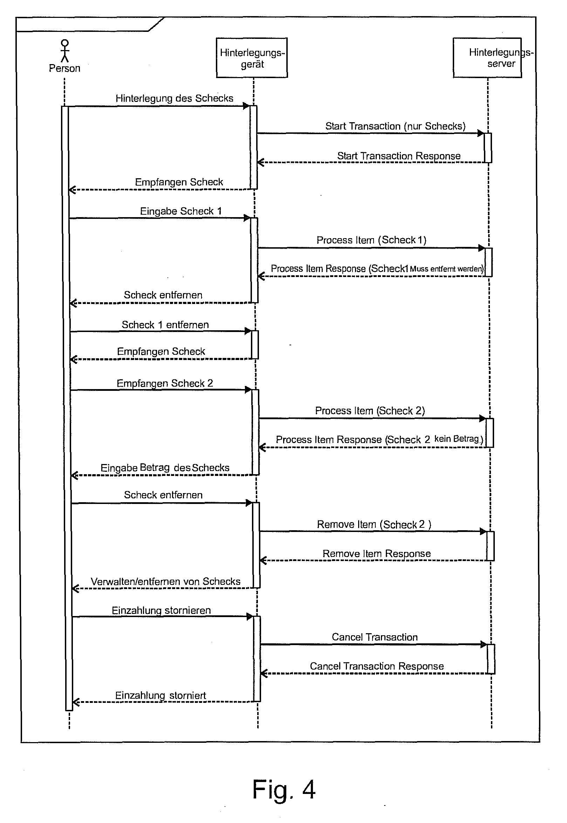

Die Figur 4 zeigt den Ablauf eines Verfahrens, bei dem zwei Schecks eingegeben werden, wobei der zweite Scheck wieder aus dem SB-Automat entfernt werden soll und nicht gutgeschrieben werden soll.

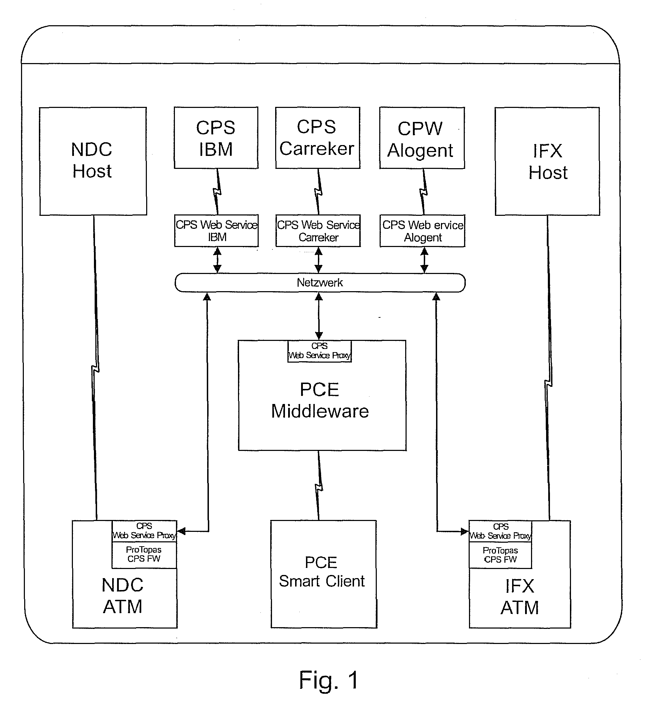

Die Figur 1 zeigt den grundsätzlichen Aufbau des Web-Services, der von unterschiedlichen Anbietern wie IBM, Carreker, Alogent angeboten werden kann und mit unterschiedlichen SB Terminals/ATM über ein Netzwerk kommunizieren kann, wobei ein Proxy, der auf dem SB Automaten installiert ist, für die Abbildung der Technik innerhalb der ATMs auf die des Web-Services eingesetzt wird.

Zur Implementierung eines Web-Services kann z.B. Apache-Axis, eingesetzt werden, wie auch JWSDP, .NET, etc.

Der Service kann das SOAP-RPC Kommunikations-Modell bereitstellen. Die API kann vollständig in einem WSDL-File beschrieben sein, aus dem dann automatisch das Skelett bzw. der Rahmen des Services generiert wird, der dann mit durch entsprechende Programmierung mit Leben gefüllt werden muss.

## Patentansprüche

1. Verfahren zur Übergabe und Verarbeitung von Schecks mit einem SB-Automaten, der eine Leseeinheit aufweist, um die Bilddaten eines Schecks einzulesen, mit einem Web-Service, der über ein Netzwerk bereitgestellt wird, umfassend die Schritte:
- erfassen der Bilddaten des Schecks durch den SB-Automat durch die Leseeinheit;
- Übermitteln der Bilddaten an den Web-Service auf der Basis einer offenen API (Application Programming Interface) ohne dabei auf die Standardprotokolle von SB-Automaten im Bereich des Zahlungsverkehrs zurückzugreifen;
- Verarbeiten der Bilddaten durch den Web-Service, so dass die Textdaten auf dem Scheck erkannt werden;
- Verbuchen der erkannten Daten.

2. Das Verfahren nach dem vorhergehenden Anspruch, wobei die Kommunikation zwischen dem Web-Service und dem SB-Automat über einen Proxy abläuft, der eine Abbildung auf die API ermöglicht.

3. Das Verfahren nach einem oder mehreren der vorhergehenden Ansprüche, wobei beim Aufruf der API eine Versionsinformation übermittelt wird, um so die Ausführung des richtigen Web-Service zu bestimmen.

4. Das Verfahren nach einem oder mehreren der vorhergehenden Ansprüche, wobei die Aufrufe des Web-Service auf der Basis von RPC (Remote Procedure Calls) basieren.

5. Das Verfahren nach einem oder mehreren der vorhergehenden Ansprüche, wobei eine mehrfache Datenübertragung durch eindeutige MessageIDs abgefangen wird.

6. Das Verfahren nach dem vorhergehenden Anspruch, wobei die Anfragen und die Antworten gespeichert werden, um redundante Anfragen beantworten zu können und/oder um diese erneut zu senden.

7. Das Verfahren nach einem oder mehreren der vorhergehenden Ansprüche, wobei ein Dialog zwischen Web-Service und SB-Automaten erfolgt, in dem der Benutzer des SB-Automaten, eingebunden wird, um die erkannten Daten auf dem Scheck zu bestätigen.

8. Das Verfahren nach einem oder mehreren der vorhergehenden Ansprüche, wobei die so bestimmten Daten sofort auf der Basis von Kontoinformationen verbucht werden.

9. SB-Automat zur Entgegennahme und Verarbeitung von Schecks umfassend:
- eine Leseeinheit, um die Bilddaten eines Schecks einzulesen,
- mit Mittel, die eine offene API bereitstellen, die eine Verbindung mit einem Web-Service erlauben, der über ein Netzwerk bereitgestellt wird,
- mit einer Prozessor, der so eingerichtet ist, dass die Bilddaten an den Web-Service auf der Basis der offenen API (Application Programming Interface) übermittelt werden, ohne dabei auf die Standardprotokolle von SB-Automaten im Bereich des Zahlungsverkehrs zurückzugreifen, wobei die Textdaten auf dem Scheck vom Web-Service erkannt werden, um diese dann verbuchen zu lassen.

10. SB-Automat nach dem vorhergehenden SB-Automaten-Anspruch, wobei die Kommunikation zwischen dem Web-Service und dem SB-Automat über einen Proxy abläuft, der eine Abbildung auf die API ermöglicht und auf dem SB-Automaten angeordnet ist.

11. SB-Automat nach einem oder mehreren der vorhergehenden SB-Automaten-Ansprüche, wobei die Bearbeitungseinheit so ausgebildet ist, dass eine mehrfache Datenübertragung durch eindeutige MessageIDs abgefangen wird.

12. SB-Automat nach einem oder mehreren der vorhergehenden SB-Automaten-Ansprüche, wobei Mittel vorhanden sind, die einen Dialog zwischen Web-Service und SB-Automaten erlauben, in dem der Benutzer des SB-Automaten, eingebunden wird, um die erkannten Daten auf dem Scheck zu bestätigen.

13. Web-Service-Server zur Verarbeitung von Schecks, dessen Bildinformationen von einem SB-Automaten übermittelt wurden, umfassend:
- Einen Netzwerkanschluss, um mit dem SB-Automaten zu kommunizieren, um so die Bilddaten zu erlangen;
- Eine Bearbeitungseinheit, die auf der Basis einer offenen API (Application Programming Interface) einen Web-Service bereitstellt, ohne dabei auf die Standardprotokolle von SB-Automaten im Bereich des Zahlungsverkehrs zurückzugreifen;
- Eine Textdatenerkennungseinheit die Textdaten auf dem Scheck auf der Basis der Bilddaten erkennt;
- Eine Einheit zum Einleiten einer Verbuchung der erkannten Daten.

14. Web-Service-Server nach einem oder mehreren der vorhergehenden Web-Service-Server Ansprüche, wobei Mittel vorhanden sind, die die beim Aufruf der API übermittelte Versionsinformation überprüfen, um so die Ausführung des richtigen Web-Service zu bestimmen.

15. Web-Service-Server nach einem oder mehreren der vorhergehenden Web-Service-Server Ansprüche, wobei Mittel vorhanden sind, die eine mehrfache Datenübertragung durch eindeutige MessageIDs abfangen.

16. Web-Service-Server nach dem vorhergehenden Web-Service-Server Anspruch, wobei Speichermittel vorhanden sind, um die Anfragen und die Antworten zu speichern, um redundante Anfragen beantworten zu können und/oder um diese erneut zu senden.
